Europäisches Patentamt

European Patent Office

Office européen des brevets

(19)

(11) Numéro de publication : **0 441 693 A1**

## (12) DEMANDE DE BREVET EUROPEEN

(21) Numéro de dépôt : 91400264.7

(22) Date de dépôt : 05.02.91

(51) Int. Cl.⁵ : **G02B 6/16**

(30) Priorité : 06.02.90 FR 9001345

(43) Date de publication de la demande :
14.08.91 Bulletin 91/33

(84) Etats contractants désignés :
AT BE CH DE DK ES FR GB GR IT LI LU NL SE

(71) Demandeur : BERTIN & CIE
Zone Industrielle Boîte postale 3
F-78373 Plaisir Cédex (FR)

(72) Inventeur : **Sansonetti, Pierre**
**Les Vignes de Marius, Jas de Bouffan**
**F-13090 Aix en Provence (FR)**

(74) Mandataire : **Ramey, Daniel et al**
**Cabinet Ores 6 Avenue de Messine**
**F-75008 Paris (FR)**

(54) **Procédé de réalisation d'un réseau d'indice dans une fibre optique, et réseau de capteurs quasi-distribué formé dans cette fibre.**

(57) Réseau de capteurs quasi distribué dans une fibre optique (10), les capteurs étant délimités le long de la fibre par des zones de couplage intermodal qui sont réalisées par insolation de la fibre optique (10) au moyen d'un faisceau laser (16) à travers un masque (18) ayant une transmission spatiale périodique accordée sur la différence des constantes de propagation des deux modes à coupler.

FIG.1

EP 0 441 693 A1

# PROCEDE DE REALISATION D'UN RESEAU D'INDICE DANS UNE FIBRE OPTIQUE, ET RESEAU DE CAPTEURS QUASI-DISTRIBUE FORME DANS CETTE FIBRE

L'invention concerne un procédé de réalisation d'un réseau d'indice dans une fibre optique multimodale, ou ne propageant que quelques modes, ainsi qu'un réseau de capteurs quasi-distribué formé dans cette fibre optique.

On sait que, pour réaliser le couplage entre deux modes de propagation de la lumière dans une fibre optique, une solution consiste à créer un réseau d'indice le long de la fibre dans la structure guidante de celle-ci, ce réseau d'indice étant périodique et ayant une période spatiale égale à un multiple de $2\pi$ divisé par la différence des constantes de propagation des deux modes de propagation de la lumière.

Jusqu'à présent, les réseaux d'indice ont été créés par usinage et attaque chimique de la fibre, ce qui a pour inconvénient de fragiliser la fibre, ou bien par compression mécanique locale de la fibre, avec pour inconvénients une définition peu précise des points de couplage intermodal, ainsi qu'un encombrement et une fragilisation de la fibre.

L'invention a notamment pour but d'éviter ces inconvénients.

Elle a pour objet un procédé de réalisation d'un réseau d'indice dans une fibre optique bimodale ou multimodale, qui ne fragilise pas la fibre optique et qui offre une délimitation très précise des points de couplage.

Elle a également pour objet un réseau de capteurs quasi distribué dans une fibre optique, réalisé par exécution de ce procédé.

Elle propose donc un procédé de réalisation d'un réseau d'indice dans une fibre optique multimodale, caractérisé en ce qu'il consiste à soumettre la fibre optique à une insolation par un faisceau laser, à travers un masque à transmission périodique appliqué sur la fibre optique.

L'insolation de la fibre par le faisceau laser provoque une variation d'indice dans le coeur de la fibre, notamment quand ce coeur a un dopage au germanium.

L'insolation à travers un masque à transmission périodique permet de réaliser très simplement le réseau d'indice souhaité dans la fibre.

De préférence, le faisceau laser est orienté perpendiculairement à l'axe de la fibre.

Il est possible de superposer, dans le masque, deux périodes longitudinales différentes de transmission, de façon à permettre, dans la fibre, le couplage simultané de, par exemple, deux modes de polarisation et deux modes transverses de guidage de la lumière dans la fibre optique ou deux modes transverses dans deux polarisations.

L'insolation de la fibre optique au moyen du faisceau laser et du masque est répétée à intervalles réguliers le long de la fibre optique, ces intervalles pouvant être de l'ordre d'une dizaine de centimètres par exemple.

La fibre optique constitue alors un réseau de capteurs.

L'invention propose également un réseau de capteurs quasi-distribué dans une fibre optique, caractérisé en ce que les capteurs sont définis par des segments de la fibre optique délimités par des zones de couplage intermodal à réseau d'indice périodique, qui sont formées dans la fibre optique par exécution du procédé précité.

Une première extrémité de la fibre optique est raccordée par un polariseur à une source lumineuse telle qu'une diode superluminescente, qui injecte dans la fibre optique un flux lumineux selon un seul mode de propagation, et la seconde extrémité de la fibre est reliée à un système de démultiplexage.

Ce système comprend des moyens d'accord sur les différences de marche optique générées par les capteurs réalisant ainsi un démultiplexage de cohérence.

En variante, on peut raccorder à la fibre optique des systèmes de multiplexage en nombre égal à celui des capteurs, chaque système étant accordé sur la différence de marche optique correspondant à un capteur particulier.

Ces capteurs permettent de mesurer des grandeurs physiques, telles que la température, une déformation, la pression, un champ magnétique, etc..., agissant sur les segments de fibre qui constituent ces capteurs.

De tels capteurs sont utilisables en particulier sur des structures, par exemple pour la mesure des contraintes des éléments d'une structure et la surveillance des variations de ces contraintes.

L'invention sera mieux comprise et d'autres caractéristiques, détails et avantages de celle-ci apparaitront plus clairement à la lecture de la description qui suit, faite à titre d'exemple en référence aux dessins annexés dans lesquels :

la figure 1 illustre schématiquement le procédé selon l'invention ;

la figure 2 illustre schématiquement l'utilisation d'un réseau de capteurs selon l'invention ;

la figure 3 illustre schématiquement une variante d'utilisation d'un tel réseau de capteurs.

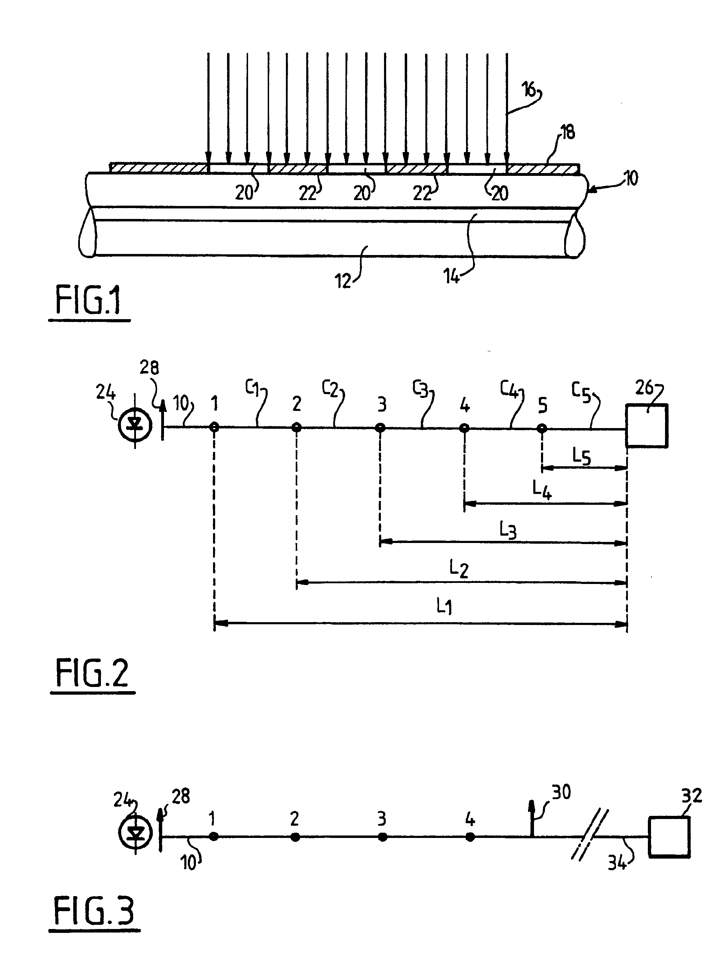

On se réfère d'abord à la figure 1, dans laquelle la référence 10 désigne une fibre optique multimodale, ou propageant quelques modes, comprenant une gaine 12 et un coeur 14, par exemple de silice dopée au germanium. Pour former un réseau d'indice à distribution spatiale périodique dans le coeur de la fibre optique, l'invention prévoit d'exposer cette fibre à un faisceau laser 16 de dimensions appropriées, à travers un masque 18 appliqué sur l'extérieur de la fibre 10, le faisceau laser 16 étant orienté perpendiculairement à l'axe de la fibre.

On peut par exemple utiliser un laser continu à argon, d'une puissance d'environ 50mW, émettant sur une longueur d'onde de 514 nm. La durée d'insolation est d'environ 30 minutes. On peut également émettre sur une bande spectrale centrée sur 240 nm.

Le masque 18 est à transmission périodique longitudinalement, et comporte des ouvertures 20 séparées les unes des autres par des parties pleines 22, la répartition de ces parties pleines et de ces ouvertures étant périodique, de période spatiale $\Lambda$ donnée par la relation suivante :

$$\Lambda = p. \ 2\ \pi/\Delta\ \beta$$

où p est un nombre entier

$\Delta\ \beta$ est la différence des constantes de propagation des deux modes à coupler dans la fibre ($\Delta\ \beta$ étant liée à la différence $\Delta\ n$ d'indice effectif des deux modes par la relation $\lambda.\Delta\ \beta = 2\ \pi.\ \Delta\ n$).

L'insolation de la fibre optique par les ouvertures 20 du masque se traduit par des variations d'indice dans le coeur 14 de la fibre, et ces variations d'indice permettent, lorsqu'elles sont périodiques de période spatiale $\Lambda$ définie par la relation ci-dessus, un couplage entre deux modes de propagation de la lumière dont les constantes de propagation vérifient la relation ci-dessus.

On peut coupler de cette façon les deux modes de polarisation d'une fibre biréfringente (la période élémentaire $2\ \pi/\Delta\ \beta$ étant de l'ordre du millimètre).

On peut également coupler deux modes transverses de guidage (par exemple $LP_{01}$ et $LP_{11}$), la période élémentaire $2\ \pi/\Delta\ \beta$ étant alors de l'ordre d'un demi-millimètre.

On peut également coupler simultanément des modes de polarisation et des modes transverses, si les deux périodes spatiales correspondantes sont superposées dans le masque 18.

De plus, tous types de modes peuvent être couplés, si la période est ajustée de façon appropriée.

En déplaçant la fibre optique 10 longitudinalement par rapport au masque 18 et au faisceau laser 16, on peut créer dans la fibre optique diverses zones à réseau d'indice, formant des points de couplage intermodal, qui sont espacés régulièrement les uns des autres et sont séparés par des intervalles qui peuvent être de l'ordre d'une dizaine de centimètres par exemple, la longueur d'une zone de couplage étant de quelques millimètres

On peut ainsi obtenir (figure 2) une fibre optique 10 présentant un certain nombre de points de couplage désignés par les références 1, 2, 3, 4, 5, ...., définissant entre eux des tronçons ou des segments de fibre qui constituent des capteurs C1, C2, C3, C4, C5,...

Une extrémité de la fibre optique 10 peut être reliée à une source lumineuse 24 telle qu'une diode super luminescente par un polariseur 28 aligné sur l'un des axes neutres, et l'autre extrémité de la fibre est raccordée à un système de démultiplexage 26 susceptible d'être accordé successivement sur les diverses différences de marche optique qui correspondent aux longueurs L1, L2, L3, L4, L5..., de fibre entre les points 1, 2, 3, 4, 5,..., et la sortie de la fibre.

Les informations relatives à chaque capteur C1, C2, C3, C4, C5..., sont obtenues par soustractions successives.

En variante, on peut bien entendu utiliser des systèmes de démultiplexage en nombre égal à celui des longueurs Li, chaque système étant accordé sur la différence de marche optique correspondant à une longueur Li particulière.

Si l'on injecte la lumière à l'entrée de la fibre optique 10 dans un seul mode, alors que la fibre peut en propager deux, le premier point de couplage 1 permet le passage d'une partie du flux dans l'autre mode et l'on obtient, à la sortie de la fibre 10, un signal d'interférence dont la phase est :

$$\Delta\ \phi_1 = \Delta\ \beta\ .\ L_1$$

où $= L_1$ est la longueur de fibre depuis le point 1 jusqu'à la sortie de la fibre, $\Delta\ \beta$ est la différence des constantes de propagation des deux modes.

De même, le deuxième point de couplage permet un couplage entre les deux modes de propagation de la lumière, ce qui se traduit par l'obtention, à la sortie de la fibre 10, d'un signal d'interférence dont la phase est :

$$\Delta\ \phi_2 = \Delta\ \beta.\ L_2$$

et ainsi de suite pour les autres points de couplage.

Ces différentes phases obtenues en sortie de la fibre 10 permettent de déterminer les caractéristiques de propagation de la lumière dans les longueurs de fibre L1, L2, L3, L4, L5, ... . Par différence, on peut alors obtenir les caractéristiques de propagation de la lumière entre les points de couplage, c'est-à-dire pour chaque capteur C1, C2, C3, C4, C5, ... . Un étalonnage préalable permet de remonter aux valeurs des grandeurs physiques, telles que la température, les déformations, la pression, le champ magnétique, etc... qui agissent sur ces capteurs et qui modifient les caractéristiques de propagation de la lumière dans les tronçons ou segments de fibre correspondants.

Le système 26 permet de démultiplexer les signaux produits par ces différents capteurs, lorsque les différences de marche optique qui correspondent aux intervalles entre points de couplage sont supérieures à la longueur de cohérence de la source lumineuse 24, le démultiplexage étant basé sur la création de différences de phase $-\Delta\ \phi$ i correspondant chacune à une longueur Li. Ceci peut être réalisé grâce à un déphaseur à différence de marche variable entre les deux modes, l'ensemble formant un seul interféromètre. Pour le couplage de deux modes de polarisation, un polariseur à 45° des axes neutres placé en sortie du système de démultiplexage 26, complète l'ensemble capteurs-démultiplexeur. Pour le couplage de deux modes transverses, un filtre spatial est utilisé.

Si Δ n est de l'ordre de 10⁻³, et si la longueur de cohérence de la source lumineuse est de l'ordre de 50 microns, il faut une distance entre points de couplage supérieure à 10 cm, la distance entre le dernier point de couplage et la sortie de la fibre optique étant au moins du même ordre.

On a représenté en figure 3 la variante dans laquelle, contrairement à la réalisation de la figure 2 où l'ensemble capteurs-récepteur ne forme qu'un seul interféromètre, le réseau de capteurs et un polariseur 30 orienté à 45° des axes neutres de la fibre optique 10, forment un interféromètre qui réalise le codage du spectre de la source lumineuse 24. Un interféromètre 32 d'un type quelconque, accordable sur les différences de marche optique voulues et relié au polariseur 30 par une autre fibre 34, permet de démoduler le codage du spectre de la source 24.

Ce système n'est en particulier pas sensible à la longueur de la liaison entre le réseau de capteurs et l'interféromètre 32.

**Revendications**

1. Procédé de réalisation d'un réseau d'indice dans une fibre optique multimodale, caractérisé en ce qu'il consiste à soumettre la fibre optique (10) à une insolation par un faisceau laser (16) à travers un masque (18) à transmission périodique, appliqué sur la fibre optique (10), la période étant le long de la fibre.

2. Procédé selon la revendication 1, caractérisé en ce que le faisceau laser (16) est orienté perpendiculairement à l'axe de la fibre.

3. Procédé selon la revendication 1 ou 2, caractérisé en ce que la période spatiale de transmission du masque (18) est égale à un multiple de $2\pi$ divisé par la différence des constantes de propagation des deux modes de propagation de la lumière à coupler dans la fibre.

4. Procédé selon l'une des revendications précédentes, caractérisé en ce que, dans le masque (18), deux périodes spatiales différentes de transmission sont superposées pour le couplage simultané de, par exemple, deux modes de polarisation et deux modes transverses de guidage de la lumière dans la fibre optique, ou deux modes transverses dans deux polarisations.

5. Procédé selon l'une des revendications précédentes, caractérisé en ce qu'il consiste à répéter l'insolation de la fibre optique, ou moyen du faisceau laser (16) et du masque (18), à intervalles réguliers le long de la fibre optique, ces intervalles étant de l'ordre d'une dizaine de centimètres par exemple.

6. Procédé selon l'une des revendications précédentes, caractérisé en ce que la fibre optique est en silice dopée au germanium.

7. Réseau de capteurs quasi-distribué dans une fibre optique (10), caractérisé en ce que les capteurs C1, C2, C3, C4, C5 sont définis par des segments de la fibre optique délimités par des zones (1, 2, 3, 4, 5) de couplage intermodal à réseau d'indice périodique, formées dans la fibre optique (10) par exécution du procédé selon l'une des revendications précédentes.

8. Réseau selon la revendication 7, caractérisé en ce qu'une première extrémité de la fibre optique (10) est raccordée par un polariseur (28) à une source lumineuse (24) telle qu'une diode superluminescente, injectant dans la fibre optique un flux lumineux selon un seul mode de propagation, et la seconde extrémité de la fibre est reliée à un système (26) de démultiplexage par cohérence.

9. Réseau selon la revendication 7 ou 8, caractérisé en ce que les différences de marche optique dans les intervalles entre deux zones de couplage intermodal sont supérieures à la longueur de cohérence de la source lumineuse (24).

10. Réseau selon la revendication 8 ou 9, caractérisé en ce que le système de démultiplexage (26) comprend des moyens d'accord sur les différences de marche optique dans la fibre (10) entre les diverses zones de couplage intermodal.

11. Réseau selon la revendication 8 ou 9, caractérisé en ce que le système de démultiplexage comprend plusieurs systèmes accordés chacun sur une différence de marche optique dans la fibre entre deux zones de couplage intermodal.

12. Réseau selon la revendication 8 ou 9, caractérisé en ce qu'il constitue avec un polariseur (30) orienté à 45° des axes neutres de la fibre optique, un interféromètre de codage du spectre émis par la source lumineuse (24) et est raccordé à un interféromètre de démodulation (32) d'un type quelconque.

FIG.1

FIG.2

FIG.3